# EUROPÄISCHE PATENTSCHRIFT

(11) **EP 3 424 304 B1**
(45) Veröffentlichungstag und Bekanntmachung des Hinweises auf die Patenterteilung: **26.05.2021**
(21) Anmeldenummer: 17179672.5
(22) Anmeldetag: 04.07.2017
(51) Int. Cl.: A01G 23/099, B27B 17/00

(54) **GARTEN- UND/ODER FORSTSYSTEM ZUR DRAHTLOSEN BESTIMMUNG VON ABSTÄNDEN**
GARDEN AND/OR FOREST SYSTEM FOR WIRELESS DETERMINATION OF DISTANCES
SYSTÈME FORESTIER ET/OU DE JARDIN POUR LA DETECTION DE DISTANCE SANS FIL

(43) Veröffentlichungstag der Anmeldung: 09.01.2019
(73) Patentinhaber: Andreas Stihl AG & Co. KG, 71336 Waiblingen (DE)
(72) Erfinder: Mang, Harald, 71364 Winnenden (DE); Hollmeier, Friedrich, 73635 Rudersberg (DE)
(74) Vertreter: Patentanwälte Ruff, Wilhelm, Beier, Dauster & Partner mbB

(56) Entgegenhaltungen:
- DE-A1- 4 232 412
- DE-A1-102008 027 185
- DE-A1-102011 100 016
- US-A1- 2015 121 712
- US-A1- 2015 360 305

## Beschreibung

### ANWENDUNGSGEBIET UND STAND DER TECHNIK

Die Erfindung bezieht sich auf ein Garten- und/oder Forstsystem.

Garten- und/oder Forstsysteme sind bekannt.

Insbesondere ist aus der DE 10 2011 100 016 A1 bekannt, dass ein Längenanzeigegerät, das auf einer Motorkettensäge positioniert ist, mit je einer rechts als auch links einer Motoreinheit fixierten Ausstrahlvorrichtung für zur Längenmessung tauglichen Längenmessmitteln wie beispielsweise Laserstrahlen verbunden ist. Die Längenmessmittel werden von einer am Anfang, über einem äußeren Rand eines abzumessenden Werkstücks befestigten Reflexion- bzw. Begrenzungsscheibe gespiegelt oder begrenzt. Durch Druck auf eine, am äußeren Seitenteil eines Magazins befestigte Klammervorrichtung wird eine Klammer ausgestoßen und durch einen aus dem Magazin ragenden Teil der Reflexion- bzw. Begrenzungsscheibe hindurchgeführt und somit diese an eine Anschnittsfläche eines Baumstamms geheftet.

Des Weiteren ist aus der DE 10 2008 027 185 A1 ein handgeführtes Arbeitsgerät mit einer Einrichtung zur Bestimmung der Position und/oder der Entfernung des Arbeitsgeräts relativ zu mindestens einem Referenzpunkt bekannt. Die Einrichtung umfasst mindestens zwei lokale und mindestens für die Dauer der Bestimmung von Position und/oder Entfernung ortsfest angeordnete Datenübertragungsmittel zum kabellosen Empfang und/oder Senden von Signalen und mindestens ein an dem Arbeitsgerät angeordnetes Datenübertragungsmittel zum kabellosen Senden und/oder Empfangen von Signalen. Die ortsfest angeordneten Datenübertragungsmittel sind in einem Abstand zueinander beliebig angeordnet und bilden ein lokales Referenzsystem, wobei die ortsfest angeordneten Datenübertragungsmittel mit dem am Arbeitsgerät angeordneten Datenübertragungsmittel zusammenwirken. Die ortsfest angeordneten Datenübertragungsmittel sind an mindestens einem transportablen Ständer angeordnet.

### AUFGABE UND LÖSUNG

Der Erfindung liegt als Aufgabe die Bereitstellung eines Garten- und/oder Forstsystems zugrunde, das verbesserte Eigenschaften aufweist, insbesondere benutzerfreundlich ist und eine Messgenauigkeit erhöht.

Die Erfindung löst diese Aufgabe durch die Bereitstellung eines Garten- und/oder Forstsystems mit den Merkmalen des Anspruchs 1. Vorteilhafte Weiterbildungen und/oder Ausgestaltungen der Erfindung sind in den abhängigen Ansprüchen beschrieben.

Das erfindungsgemäße Garten- und/oder Forstsystem weist ein Abstandsmesssystem auf. Das Abstandsmesssystem weist ein erstes Abstandsteil und ein zweites Abstandsteil auf. Das zweite Abstandsteil ist zum Tragen an einem Körper eines Garten- und/oder Forstarbeiters ausgebildet. Dabei ist das zweite Abstandsteil zum zumindest teilweisen Umfassen oder Umschließen einer Extremität des Körpers des Garten- und/oder Forstarbeiters ausgebildet. Zusätzlich oder alternativ weist das Garten- und/oder Forstsystem einen Schutzhelm und/oder einen Gesichts- und/oder Gehörschutz und/oder eine Schutzbrille und/oder einen Schutzhandschuh und/oder eine Smartwatch und/oder ein Armband und/oder einen Armreif auf, an welchem/welcher das zweite Abstandsteil angeordnet ist. Das Abstandsmesssystem ist dazu ausgebildet, ein Messsignal zwischen dem ersten Abstandsteil und dem zweiten Abstandsteil auszutauschen, insbesondere automatisch auszutauschen, und basierend auf dem ausgetauschten Messsignal einen Abstand zwischen dem ersten Abstandsteil und dem zweiten Abstandsteil zu messen, insbesondere automatisch zu messen. Das erfindungsgemäße Garten- und/oder Forstsystem weist weiter eine Ausgabeeinrichtung auf, insbesondere eine elektrische Ausgabeeinrichtung. Die Ausgabeeinrichtung ist zum Ausgeben, insbesondere zum automatischen Ausgeben, einer auf dem gemessenen Abstand basierenden Information an den Garten- und/oder Forstarbeiter ausgebildet ist.

Das Garten- und/oder Forstsystem ermöglicht dem Garten- und/oder Forstarbeiter Abstände, insbesondere Längen, zu messen, insbesondere während der Garten- und/oder Forstarbeit. Die Garten- und/oder Forstarbeit kann ein Durchtrennen eines, insbesondere gefällten und/oder liegenden, Baums oder eines Baumstamms des Baums in mehrere Abschnitte aufweisen oder sein. Die Abstände können zuvor mittels einer Aushaltung des Baums beziehungsweise seines Baumstamms vorgegeben worden sein. Insbesondere kann das Garten- und/oder Forstsystem eine Vorgabeeinrichtung aufweisen, die zum Vorgeben des Abstands ausgebildet sein kann.

Durch das Tragen des zweiten Abstandsteils am Körper des Garten- und/oder Forstarbeiters kann das zweite Abstandsteil vor rauen Umgebungsbedingungen, insbesondere von einem motorangetriebenen Garten- und/oder Forstgerät verursacht, entkoppelt und/oder geschützt sein. Dies kann eine erhöhte Messgenauigkeit der Abstandsmessung ermöglichen. Des Weiteren ermöglicht das Tragen am Körper des Garten- und/oder Forstarbeiters, dass das zweite Abstandsteil sich immer an der Stelle des Baums befindet, an der sich der Garten-und/oder Forstarbeiter befindet. In der Regel werden bestimmte Stellen, an denen der Garten-und/oder Forstarbeiter eine Tätigkeit ausführen soll, von großem Interesse sein. Insbesondere kann Tragen am Körper ein Anheften oder ein Befestigen am Körper aufweisen oder sein.

Die Information kann den gemessenen Abstand beziehungsweise einen Wert oder Betrag des gemessenen Abstands aufweisen oder sein. Zusätzlich oder alternativ kann die Information ein Erreichen des Abstands aufweisen oder sein, der insbesondere vorgegeben sein kann.

Insbesondere können das Abstandsmesssystem und die Ausgabeeinrichtung zum Zusammenwirken miteinander ausgebildet sein. Das zweite Abstandsteil kann von dem ersten Abstandsteil verschieden sein. Das Messsignal kann ein optisches oder ein akustisches Signal aufweisen oder sein.

Extremität kann ein Arm, ein Finger, ein Bein oder ein Kopf sein. In vorteilhafterweise kann durch das zumindest teilweise Umfassen der Extremität das zweite Abstandsteil von dem Garten- und/oder Forstarbeiter ohne ein aktives Greifen oder Packen getragen werden. Insbesondere kann ein Tragen am Arm vorteilhaft sein, insbesondere wenn der Arm in Verlängerung eines auszuführenden Trennschnitts zum Durchtrennen beim Ausführen von diesem ausgerichtet sein wird.

In der Regel wird der Garten- und/oder Forstarbeiter mindestens einen der zuvor aufgelisteten Gegenstände, insbesondere zur Garten- und/oder Forstarbeit, tragen. In vorteilhafterweise kann der Garten- und/oder Forstarbeiter durch das Tragen des Gegenstands gleichzeitig das zweite Abstandsteil mit sich tragen.

In einer Weiterbildung der Erfindung ist das erste Abstandsteil zum Anbringen an einem Garten-und/oder Forstgerät, insbesondere einem forstwirtschaftlichen Gerät, ausgebildet. In der Regel wird der Garten- und/oder Forstarbeiter das Garten- und/oder Forstgerät, insbesondere zur Garten- und/oder Forstarbeit, mit sich führen. Durch das Anbringen des ersten Abstandsteils am Garten- und/oder Forstgerät kann das erste Abstandsteil ohne weitere Beachtung mitgeführt werden. Zusätzlich oder alternativ kann das Anbringen des ersten Abstandsteils am Garten-und/oder Forstgerät eine stabilere und/oder bessere Messposition des ersten Abstandsteils ermöglichen. Insbesondere kann das erste Abstandsteil dazu ausgebildet sein, mit einer stoffschlüssigen, formschlüssigen oder kraftschlüssigen Verbindung am Garten- und/oder Forstgerät angebracht zu werden.

In einer Weiterbildung der Erfindung weist das Garten- und/oder Forstsystem das Garten-und/oder Forstgerät auf. Das erste Abstandsteil ist an dem Garten- und/oder Forstgerät angebracht. Insbesondere kann das Garten- und/oder Forstgerät eine maximale Masse von 50 Kilogramm (kg), insbesondere von 20 kg, insbesondere von 10 kg, aufweisen. Das Garten-und/oder Forstgerät kann als ein handgetragenes Garten- und/oder Forstgerät ausgebildet sein.

In einer Weiterbildung der Erfindung weist das Garten- und/oder Forstgerät eine Axt und/oder eine Sapie und/oder einen Fällheber und/oder einen Keil und/oder eine Säge und/oder einen Antriebsenergiespeicher auf oder ist ein solcher. In der Regel wird der Garten- und/oder Forstarbeiter das/die derart weitergebildete/n Garten- und/oder Forstgeräte, insbesondere zum Fällen und/oder Durchtrennen eines Baums oder seines Baumstamms, mit sich führen. Mindestens eines der derart weitergebildeten Garten- und/oder Forstgeräte kann motorangetrieben sein. Insbesondere kann die Säge als eine motorangetriebene Säge ausgebildet sein, insbesondere als eine Kettensäge. Zusätzlich oder alternativ kann das Garten- und/oder Forstsystem ein weiteres motorangetriebenes Garten- und/oder Forstgerät aufweisen. Das motorangetriebene Garten- und/oder Forstgerät und/oder das weitere motorangetriebene Garten- und/oder Forstgerät können/kann jeweils einen Verbrennungsmotor oder einen Elektromotor aufweisen. Der Antriebsenergiespeicher kann zur Antriebsenergieversorgung des motorangetriebenen Garten- und/oder Forstgeräts und/oder des weiteren motorangetriebenen Garten- und/oder Forstgeräts ausgebildet sein. Insbesondere kann der Antriebsenergiespeicher einen Akkumulator, eine Batterie, einen Kraftstoffkanister und/oder einen Ölkanister aufweisen oder sein.

In einer Weiterbildung der Erfindung weist das Garten- und/oder Forstgerät eine ausziehbare Teleskopvorrichtung auf. Das erste Abstandsteil ist an der Teleskopvorrichtung angebracht. Die Teleskopvorrichtung kann eine bessere Messposition des ersten Abstandsteils ermöglichen. Insbesondere kann durch die Teleskopvorrichtung ein Höhenunterschied zwischen dem ersten Abstandsteil und dem zweiten Abstandsteil verringert oder ausgeglichen werden.

In einer Weiterbildung der Erfindung weist das Garten- und/oder Forstsystem einen Schutzhelm und/oder einen Gesichts- und/oder Gehörschutz und/oder eine Schutzbrille und/oder einen Schutzhandschuh und/oder eine Smartwatch und/oder ein Armband und/oder einen Armreif, an welchem/welcher die Ausgabeeinrichtung angeordnet ist. In vorteilhafterweise kann der Garten-und/oder Forstarbeiter durch das Tragen des Gegenstands gleichzeitig die Ausgabeeinrichtung mit sich tragen.

In einer Weiterbildung der Erfindung ist oder weist die Ausgabeeinrichtung eine Anzeige und/oder einen Schallerzeuger und/oder eine Vibrationseinrichtung auf oder ist eine solche/r. Insbesondere kann die Anzeige dazu ausgebildet sein, die mindestens eine Information in einem Sichtfeld des Garten- und/oder Forstarbeiters, insbesondere vor einer Stelle an welcher der Garten- und/oder Forstarbeiters tätig werden soll, anzuzeigen und/oder in dieses zu projizieren beziehungsweise einzublenden. Die Anzeige kann eine Markierung auf dem zu bearbeiteten Gegenstand/Stelle/Baum/Baumstamm projizieren. Die Anzeige kann auf Englisch als Head-up-Display bezeichnet werden. Dies kann auf Englisch als Virtual Reality und/oder als Augmented Reality bezeichnet werden. Insbesondere kann die Anzeige dazu ausgebildet sein, die mindestens eine Information auf einem Visier des Schutzhelms, des Gesichts- und/oder Gehörschutz und/oder der Schutzbrille, soweit vorhanden, anzuzeigen oder in diese zu projizieren. Die Anzeige kann auf Englisch als Head-mounted-Display bezeichnet werden. Der Schallerzeuger kann einen Lautsprecher aufweisen oder sein.

In einer Weiterbildung der Erfindung ist das Abstandsmesssystem dazu ausgebildet, den Abstand berührungslos oder kontaktlos zu messen. Dies kann ein benutzerfreundliches Messen ermöglichen.

In einer Weiterbildung der Erfindung weist das Messsignal ein Funksignal auf oder ist ein solches. Das Funksignal kann elektromagnetische Wellen oder Schwingungen im Radiofrequenzbereich aufweisen oder sein. Das Funksignal kann ein Ultrabreitbandsignal (UWB-Signal) aufweisen oder sein.

In einer Weiterbildung der Erfindung ist eines der beiden Abstandsteile dazu ausgebildet, das Messsignal zu senden und zu empfangen. Ein anderes der beiden Abstandsteile ist dazu ausgebildet, das Messsignal zu reflektieren. Dies kann ermöglichen, das andere beiden Abstandsteile in seinem Aufbau relativ einfach und somit relativ kostengünstig zu halten. Insbesondere kann das andere der beiden Abstandteile einen Transponder, insbesondere einen passiven Transponder, aufweisen oder sein. Das eine der beiden Abstandsteile kann eine Antenne, insbesondere eine Funkantenne, zum Senden und zum Empfangen des Messsignals aufweisen. Das eine der beiden Abstandsteile kann als Sender und Empfänger bezeichnet werden.

In einer Weiterbildung der Erfindung ist eines der beiden Abstandsteile dazu ausgebildet, das Messsignal zu senden. Ein anderes der beiden Abstandsteile ist dazu ausgebildet, das Messsignal zu empfangen. Insbesondere kann das eine der beiden Abstandsteile eine Antenne, insbesondere eine Funk-Antenne, zum Senden des Messsignals aufweisen. Das eine der beiden Abstandsteile kann als Sender bezeichnet werden. Das andere der beiden Abstandsteile kann eine Antenne, insbesondere eine Funk-Antenne, zum Empfangen des Messsignals aufweisen. Das andere der beiden Abstandsteile kann als Empfänger bezeichnet werden.

In einer Weiterbildung der Erfindung ist das Abstandsmesssystem dazu ausgebildet, den Abstand zwischen dem ersten Abstandsteil und dem zweiten Abstandsteil basierend auf einer Laufzeit des Messsignals zu messen.

In einer Weiterbildung der Erfindung ist das Garten- und/oder Forstsystem dazu ausgebildet, einen Referenzabstand zu definieren und bei der Information den definierten Referenzabstand zu berücksichtigen. Dies kann ein Referenzsetzen, insbesondere ein Nullsetzen, des Abstandsmesssystems ermöglichen. Durch das Definieren des Referenzabstands kann die Information einen Abstand, insbesondere eine Länge, und/oder ein Erreichen des, insbesondere vorgegebenen, Abstands zwischen einem Referenzpunkt und dem zweiten Abstandsteil aufweisen. Der Referenzpunkt kann sich vom ersten Abstandsteil mit dem Wert des Referenzabstands entfernt befinden. Insbesondere kann der Referenzpunkt im Bereich eines Anfangs eines Baums beziehungsweise seines Baumstamms oder im Bereich eines Trennschnitts sein. Insbesondere kann das Garten- und/oder Forstsystem oder sein Abstandsmesssystem dazu ausgebildet sein, von dem gemessen Abstand den Referenzabstand abzuziehen. Insbesondere kann das Garten- und/oder Forstsystem oder sein Abstandsmesssystem eine, insbesondere benutzerbetätigbare, Referenzdefinierungseinrichtung aufweisen, die zum Definieren des Referenzabstands und/oder zum Definieren des Referenzpunkts ausgebildet sein kann.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Garten- und/oder Forstsystems und
- Fig. 2: eine weitere Perspektivansicht eines weiteren erfindungsgemäßen Garten- und/oder Forstsystems.

### DETAILLIERTE BESCHREIBUNG DER AUSFÜHRUNGSBEISPIELE

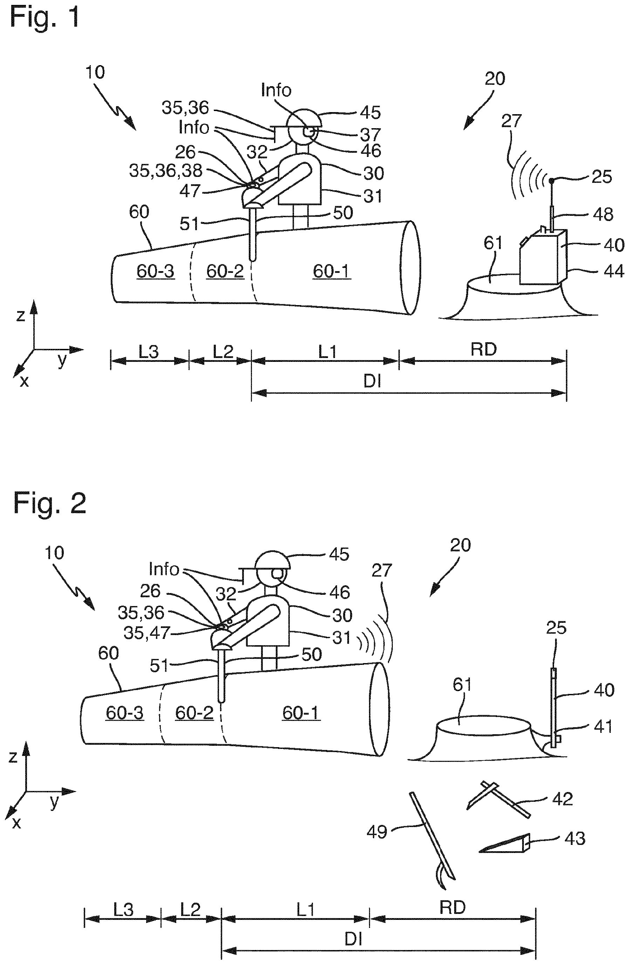

Fig. 1 zeigt ein erfindungsgemäßes Garten- und/oder Forstsystem 10. Das Garten- und/oder Forstsystem 10 weist ein Abstandsmesssystem 20 auf. Das Abstandsmesssystem 20 weist ein erstes Abstandsteil 25 und ein zweites Abstandsteil 26 auf. Das zweite Abstandsteil 26 ist zum Tragen an einem Körper 30 eines Garten- und/oder Forstarbeiters 31 ausgebildet. Das Abstandsmesssystem 20 ist dazu ausgebildet, ein Messsignal 27 zwischen dem ersten Abstandsteil 25 und dem zweiten Abstandsteil 26 auszutauschen und basierend auf dem ausgetauschten Messsignal 27 einen Abstand DI zwischen dem ersten Abstandsteil 25 und dem zweiten Abstandsteil 26 zu messen. Des Weiteren weist das Garten- und/oder Forstsystem 10 eine Ausgabeeinrichtung 35 auf. Die Ausgabeeinrichtung 35 ist zum Ausgeben einer auf dem gemessenen Abstand DI basierenden Information Info an den Garten- und/oder Forstarbeiter 31 ausgebildet.

Das erste Abstandsteil 25 ist zum Anbringen an einem Garten- und/oder Forstgerät 40 ausgebildet. Im gezeigten Ausführungsbeispiel weist das Garten- und/oder Forstsystem 10 das Garten- und/oder Forstgerät 40 auf, wobei das erste Abstandsteil 25 an dem Garten- und/oder Forstgerät 40 angebracht ist.

Im Detail weist das Garten- und/oder Forstgerät 40 einen Antriebsenergiespeicher 44 in Form eines Kraftstoffkanisters auf. Des Weiteren weist das Garten- und/oder Forstsystem 10 ein weiteres Garten- und/oder Forstgerät auf, insbesondere ein motorangetriebenes Garten-und/oder Forstgerät 51. Im gezeigten Ausführungsbeispiel ist das weitere motorangetriebene Garten- und/oder Forstgerät 51 als eine Säge ausgebildet, insbesondere als eine motorangetriebene Kettensäge. Der Antriebsenergiespeicher 44 ist zur Antriebsenergieversorgung des weiteren motorangetriebenen Garten- und/oder Forstgeräts 51 ausgebildet, insbesondere zum Nachfüllen eines Kraftstofftanks des weiteren motorangetriebenen Garten- und/oder Forstgeräts mit Kraftstoff.

Außerdem weist das Garten- und/oder Forstgerät 40 eine ausziehbare Teleskopvorrichtung 48 auf. Das erste Abstandsteil 25 ist an der Teleskopvorrichtung 48 angebracht.

Erfindungsgemäß ist das zweite Abstandsteil 26 zum zumindest teilweisen Umfassen einer Extremität 32 des Körpers 30 des Garten- und/oder Forstarbeiters 31 ausgebildet. Im gezeigten Ausführungsbeispiel umfasst das zweite Abstandsteil 26 zumindest teilweise einen rechten Arm, insbesondere einen Unterarm, des Garten- und/oder Forstarbeiters 31.

Im Detail weist das Garten- und/oder Forstsystem 10 eine Smartwatch 47 auf. An der Smartwatch 47 ist das zweite Abstandsteil 26 angeordnet. Der Garten- und/oder Forstarbeiter 31 trägt die Smartwatch am rechten Arm 32, wie zuvor beschrieben.

Zudem weist die Ausgabeeinrichtung 35 mindestens eine Anzeige 36, einen Schallerzeuger 37 und eine Vibrationseinrichtung 38 auf. Im gezeigten Ausführungsbeispiel weist die Ausgabeeinrichtung 35 zwei Anzeigen 36 auf. In alternativen Ausführungsbeispielen kann es ausreichen, wenn die Ausgabeeinrichtung entweder die Anzeige oder den Schallerzeuger oder die Vibrationseinrichtung aufweisen kann.

Des Weiteren weist das Garten- und/oder Forstsystem 10 einen Schutzhelm 45 und einen Gesichts- und/oder Gehörschutz 46 auf. Der Garten- und/oder Forstarbeiter 31 trägt den Schutzhelm 45 und den Gesichts- und/oder Gehörschutz 46 auf seinem Kopf 32.

Im gezeigten Ausführungsbeispiel ist eine der Anzeigen 36 an dem Schutzhelm 45 angeordnet, insbesondere in den Schutzhelm 45 integriert. Außerdem ist der Schallerzeuger 37 an dem Gesichts- und/oder Gehörschutz 46 angeordnet, insbesondere in den Gesichts- und/oder Gehörschutz 46 integriert. Weiter sind die Vibrationseinrichtung 38 und eine andere der Anzeigen 36 an der Smartwatch 47 angeordnet, insbesondere in die Smartwatch 47 integriert.

Erfindungsgemäß kann das Garten- und/oder Forstsystem entweder die Smartwatch oder den Schutzhelm oder den Gesichts- und/oder Gehörschutz aufweisen, an welchem/welcher das zweite Abstandsteil und/oder die Ausgabeeinrichtung angeordnet sein können/kann. Erfindungsgemäß kann das Garten- und/oder Forstsystem eine Schutzbrille und/oder einen Schutzhandschuh und/oder ein Armband und/oder einen Armreif aufweisen, an welchem/welcher das zweite Abstandsteil und/oder die Ausgabeeinrichtung angeordnet sein können/kann.

Im gezeigten Ausführungsbeispiel soll der Garten- und/oder Forstarbeiter 31 einen gefällten Baumstamm 60 in drei Abschnitte 60-1, 60-2, 60-3 durchtrennen, insbesondere durch Trennschnitte wie in Fig. 1 durch gestrichelte Linien angedeutet. Nach dem Durchtrennen soll jeder der drei Abschnitte 60-1, 60-2, 60-3 eine zuvor mittels einer Aushaltung des Baumstamms 60 ermittelte abschnittsindividuelle Länge L1, L2, L3 aufweisen. Die Längen L1, L2, L3 sind dem Garten- und/oder Forstsystem 10 bekannt und/oder vorgegeben worden.

Der Garten- und/oder Forstarbeiter 31 hat den Antriebsenergiespeicher 44 auf einen Baumstumpf 61 derart gestellt, dass der Antriebsenergiespeicher 44 und der Baumstamm 60 sich auf einer Geraden befinden. In anderen Worten: das Garten- und/oder Forstgerät 40 mit dem ersten Abstandsteil 25 ist in Verlängerung des gefällten Baumstamms 60 angeordnet, insbesondere in Verlängerung einer Längsachse des Baumstamms 60. Zuvor ist der Baumstamm 60 durch Fällen von dem Baumstumpf 61 getrennt worden. Die ausziehbare Teleskopvorrichtung 48 ist ausgezogen, so dass das erste Abstandsteil 25 mit dem zweiten Abstandsteil 26 in Fig. 1 auf gleicher Höhe ist, insbesondere wenn der Garten- und/oder Forstarbeiter eine Haltung zum Durchtrennen des Baumstamms 60 einnimmt.

Insbesondere wenn der Garten- und/oder Forstarbeiter 31 die Haltung zum Durchtrennen des Baumstamms 60 mittels der Säge 51 einnimmt, dann befindet sich in dieser Haltung sein rechter Arm 32 mit dem zweiten Abstandsteil 26 in einer Trennebene beziehungsweise Schnittebene der Säge 51. Der gemessene Abstand DI entspricht daher einem Abstand zwischen dem ersten Abstandsteil 25 und der Trennebene der Motorsäge 51 beziehungsweise den Abstand zwischen dem ersten Abstandsteil 25 und eines auszuführenden Trennschnitts.

Das Abstandsmesssystem 20 ist dazu ausgebildet, den Abstand DI berührungslos zu messen. Im Detail ist das Messsignal 27 ein Funksignal.

Weiter ist das erste Abstandsteil 25 dazu ausgebildet, das Messsignal 27 zu senden. Das zweite Abstandsteil 26 ist dazu ausgebildet, das Messsignal 27 zu empfangen. In alternativen Ausführungsbeispielen kann das zweite Abstandsteil dazu ausgebildet sein, das Messsignal zu senden, und das erste Abstandsteil kann dazu ausgebildet sein, das Messsignal zu empfangen.

Im Detail weisen/weist das erste Abstandsteil 25 und/oder das zweite Abstandsteil 26 jeweils eine elektrische Energiequelle, insbesondere einen Akkumulator oder eine Batterie, auf, welche jeweils das zugehörige Abstandsteil mit elektrischer Energie zum Senden und/oder Empfangen versorgt.

Im gezeigten Ausführungsbeispiel sendet das erste Abstandsteil 25 das Messsignal 27. Das zweite Abstandsteil 26 empfängt das gesendete Messsignal 27. Nachdem das zweite Abstandsteil 26 das Messsignal 27 empfangen hat, ermittelt das Abstandsmesssystem 20 eine Laufzeit des Messsignals 27, insbesondere von dem ersten Abstandsteil 25 zu dem zweiten Abstandsteil 26. Basierend auf der Laufzeit und einer dem zweiten Abstandsteil 26 bekannten Laufgeschwindigkeit des Messsignals 27 ermittelt das Abstandsmesssystem 20 den Abstand DI zwischen dem ersten Abstandsteil 25 und dem zweite Abstandsteil 26. Das Abstandsmesssystem 20 ermittelt den Abstand DI kontinuierlich, insbesondere mehrmals in einer Sekunde.

Zudem ist das Garten- und/oder Forstsystem 10 beziehungsweise sein Abstandsmesssystem 20 dazu ausgebildet, einen Referenzabstand RD zu definieren und bei der Information Info den definierten Referenzabstand RD zu berücksichtigen. Im Detail weist das Garten- und/oder Forstsystem 10 beziehungsweise sein Abstandsmesssystem 20 eine nicht dargestellte benutzerbetätigbare Referenzdefinierungseinrichtung in Form einer Taste an der Smartwatch 47 auf, wobei die Referenzdefinierungseinrichtung zum Definieren des Referenzabstands RD ausgebildet ist. Zum Definieren des Referenzabstands RD hält der Garten- und/oder Forstarbeiter 31 die Smartwatch 47 mit dem zweiten Abstandsteil 26 an einen in Fig. 1 rechten Anfang des Baumstamms 60 und betätigt die Referenzdefinierungseinrichtung.

In alternativen Ausführungsbeispielen kann das Garten- und/oder Forstsystem beziehungsweise sein Abstandsmesssystem zusätzlich oder alternativ dazu ausgebildet sein, ein Betätigen des motorangetriebenen Garten- und/oder Forstgeräts zu erfassen und in Abhängigkeit von dem erfassten Betätigen den Referenzabstand zu definieren. Bezogen auf das gezeigte Ausführungsbeispiel könnte das bedeuten, dass zum Definieren des Referenzabstands RD der Garten- und/oder Forstarbeiter 31 die Smartwatch 47 mit dem zweiten Abstandsteil 26 an den rechten Anfang des Baumstamms 60 hält und die Säge 51 betätigt.

Somit entspricht der definierte Referenzabstand RD der Entfernung zwischen dem rechten Anfang des Baumstamms 60 und dem ersten Abstandsteil 25.

Des Weiteren ist das Garten- und/oder Forstsystem 10 beziehungsweise sein Abstandsmesssystem 20 dazu ausgebildet, den Referenzabstand RD abzuspeichern. Außerdem ist das Garten- und/oder Forstsystem 10 beziehungsweise sein Abstandsmesssystem 20 dazu ausgebildet, von dem gemessen Abstand DI den Referenzabstand RD abzuziehen.

Nach dem Definieren des Referenzabstands RD bewegt sich der Garten- und/oder Forstarbeiter 31 mit dem zweiten Abstandsteil 26 entlang des Baumstamms 60 in Fig. 1 nach links. Wenn der gemessene Abstand DI dem Referenzabstand RD zuzüglich der vorgegebenen Länge L1 entspricht, dann gibt die Ausgabeeinrichtung 35 die Information Info aus, insbesondere das Erreichen der Länge L1. Die Information Info weist den Wert der Länge L1 und das Erreichen der Länge L1 auf. Zusätzlich kann die Information eine Tätigkeitsanweisung aufweisen, insbesondere den Baumstamm an dieser Stelle zu durchtrennen.

Im gezeigten Ausführungsbeispiel wird die Information Info an den Garten- und/oder Forstarbeiter 31 durch eine Sprachausgabe und/oder einen Ton durch den Schallerzeuger 37 akustisch ausgegeben. Des Weiteren wird die Information Info durch ein Vibrieren der Vibrationseinrichtung 38 haptisch ausgegeben. Außerdem wird die Information Info durch ein Anzeigen auf der anderen Anzeige 36 der Smartwatch 47 optisch ausgegeben. Weiter wird die Information Info durch ein Anzeigen auf der einen Anzeige 36 des Schutzhelms 45 optisch ausgegeben. Im Detail weist der Schutzhelm 45 ein Visier auf. Die Anzeige 36 ist dazu ausgebildet, die Information Info auf dem Visier des Schutzhelms 45 in einem Sichtfeld des Garten- und/oder Forstarbeiter 31, insbesondere vor dem Baumstamm 60 an passender Stelle, anzuzeigen beziehungsweise in dieses zu projizieren. In alternativen Ausführungsbeispielen kann es ausreichen, wenn die Information entweder optisch oder akustisch oder haptisch ausgegeben werden kann.

Auf die Information Info hin durchtrennt der Garten- und/oder Forstarbeiter 31 den Baumstamm 60 mit der Säge 51. Im Detail trennt er den Abschnitt 60-1 ab.

Weiterhin kann der Garten- und/oder Forstarbeiter 31 einen neuen nicht dargestellten Referenzabstand an dem neuen Anfang des Baumstamms 60 beziehungsweise der Trennschnittstelle definieren, die Länge L2 messen und den Baumstamm 60 nach der Länge L2 in die Abschnitte 60-2, 60-3 durchtrennen.

Die Fig. 2 zeigt ein weiteres Ausführungsbeispiel eines erfindungsgemäßen Garten- und/oder Forstsystems, wobei zum besseren Verständnis für identische und funktionell äquivalente Elemente gleiche Bezugszeichen verwendet sind und insoweit auch auf die obigen Ausführungen zum Ausführungsbeispiel der Fig. 1 verwiesen werden kann, so dass nachstehend im Wesentlichen auf die bestehenden Unterschiede eingegangen wird.

Im Ausführungsbeispiel von Fig. 2 weist das Garten- und/oder Forstsystem 10 ein Garten- und/oder Forstgerät 40 in Form einer Axt 41 auf, an der das erste Abstandsteil 25 angebracht ist.

Im Detail ist die Axt 41 in den Baumstumpf 61 eingeschlagen. Die Axt 41 ist nicht in den gefällten Baumstamm 60 eingeschlagen aufgrund der Gefahr, dass sich der Baumstamm 60 beziehungsweise ein abgetrennter Abschnitt, insbesondere der Abschnitt 60-1, während des Durchtrennens oder nach dem Durchtrennen bewegen kann, insbesondere wegrollen oder wegrutschen kann. Dabei würde sich die Messposition des ersten Abstandsteils 25 ändern. Dies würde ein erneutes Anordnen des ersten Abstandsteils 25 an einer sinnvollen Messposition erforderlich machen. Das Einschlagen der Axt 41 in den Baumstumpf 61 kann diese Nachteile vermeiden.

Das zweite Abstandsteil 26 ist dazu ausgebildet, das Messsignal 27 zu senden und zu empfangen. Das erste Abstandsteil 25 ist dazu ausgebildet, das Messsignal zu reflektieren. Im Detail sendet das zweite Abstandsteil 26 das Messsignal 27 aus, das gesendete Messsignal 27 wird vom ersten Abstandsteil 25 reflektiert und das reflektierte Messsignal 27 wird vom zweiten Abstandsteil 26 empfangen. In alternativen Ausführungsbeispielen kann das erste Abstandsteil dazu ausgebildet sein, das Messsignal zu senden und zu empfangen, und das zweite Abstandsteil kann dazu ausgebildet sein, das Messsignal zu reflektieren. Basierend auf der Laufzeit des Messsignals 27 ermittelt das Abstandsmesssystem 20 den Abstand DI zwischen dem ersten Abstandsteil 25 und dem zweiten Abstandsteil 26. Indem das Messsignal 27 vom ersten Abstandsteil 25 reflektiert wird, verdoppelt sich die Laufzeit des Messsignals 27 im Vergleich zu dem Ausführungsbeispiel der Fig. 1.

In den zuvor beschriebenen Ausführungsbeispielen weist das Garten- und/oder Forstgerät 40 den Antriebsenergiespeicher 44 oder die Axt 41 auf, an welchem/welcher das erste Abstandsteil 25 angeordnet ist. Zusätzlich oder alternativ kann das Garten- und/oder Forstgerät 40 eine Sapie 42, einen Fällheber 49 und/oder einen Keil 43 aufweisen, wie in Fig. 2 gezeigt, an welchem/welcher das erste Abstandsteil angebracht sein kann. Zusätzlich oder alternativ kann an der Säge das erste Abstandsteil angebracht sein.

Wie die gezeigten und oben erläuterten Ausführungsbeispiele deutlich machen, stellt die Erfindung ein Garten- und/oder Forstsystems bereit, das verbesserte Eigenschaften aufweist, insbesondere benutzerfreundlich ist und eine Messgenauigkeit erhöht.

## Patentansprüche

1. Garten- und/oder Forstsystem (10), aufweisend:
- ein Abstandsmesssystem (20), aufweisend ein erstes Abstandsteil (25) und ein zweites Abstandsteil (26),
- wobei das zweite Abstandsteil zum Tragen an einem Körper (30) eines Garten- und/oder Forstarbeiters (31) ausgebildet ist,
- wobei das Abstandsmesssystem dazu ausgebildet ist, ein Messsignal (27) zwischen dem ersten Abstandsteil und dem zweiten Abstandsteil auszutauschen und basierend auf dem ausgetauschten Messsignal einen Abstand (DI) zwischen dem ersten Abstandsteil und dem zweiten Abstandsteil zu messen, und
- eine Ausgabeeinrichtung (35), die zum Ausgeben einer auf dem gemessenen Abstand basierenden Information (Info) an den Garten- und/oder Forstarbeiter ausgebildet ist, **dadurch gekennzeichnet, dass** das zweite Abstandsteil (26) zum zumindest teilweisen Umfassen einer Extremität (32) des Körpers (30) des Garten- und/oder Forstarbeiters (31) ausgebildet ist und/ oder wobei das Garten- und/oder Forstsystem (10) einen Schutzhelm (45) und/oder einen Gesichts- und/oder Gehörschutz (46) und/oder eine Schutzbrille und/oder einen Schutzhandschuh und/oder eine Smartwatch (47) und/oder ein Armband und/oder einen Armreif aufweist, an welchem/welcher das zweite Abstandsteil (26) angeordnet ist.

2. Garten- und/oder Forstsystem (10) nach Anspruch 1,
- wobei das erste Abstandsteil (25) zum Anbringen an einem Garten- und/oder Forstgerät (40) ausgebildet ist.

3. Garten- und/oder Forstsystem (10) nach Anspruch 2, aufweisend:
- das Garten- und/oder Forstgerät (40), wobei das erste Abstandsteil (25) an dem Garten- und/oder Forstgerät angebracht ist.

4. Garten- und/oder Forstsystem (10) nach Anspruch 2 oder 3,
- wobei das Garten- und/oder Forstgerät (40) eine Axt (41) und/oder eine Sapie und/oder einen Fällheber und/oder einen Keil und/oder eine Säge und/oder einen Antriebsenergiespeicher (44) aufweist.

5. Garten- und/oder Forstsystem (10) nach einem der Ansprüche 2 bis 4,
- wobei das Garten- und/oder Forstgerät (40) eine ausziehbare Teleskopvorrichtung (48) aufweist, wobei das erste Abstandsteil (25) an der Teleskopvorrichtung angebracht ist.

6. Garten- und/oder Forstsystem (10) nach einem der vorhergehenden Ansprüche, aufweisend:
- einen Schutzhelm (45) und/oder einen Gesichts- und/oder Gehörschutz (46) und/oder eine Schutzbrille und/oder einen Schutzhandschuh und/oder eine Smartwatch (47) und/oder ein Armband und/oder einen Armreif, an welchem/welcher die Ausgabeeinrichtung (35) angeordnet ist.

7. Garten- und/oder Forstsystem (10) nach einem der vorhergehenden Ansprüche,
- wobei die Ausgabeeinrichtung (35) eine Anzeige (36) und/oder einen Schallerzeuger (37) und/oder eine Vibrationseinrichtung (38) aufweist.

8. Garten- und/oder Forstsystem (10) nach einem der vorhergehenden Ansprüche,
- wobei das Abstandsmesssystem (20) dazu ausgebildet ist, den Abstand (DI) berührungslos zu messen.

9. Garten- und/oder Forstsystem (10) nach einem der vorhergehenden Ansprüche,
- wobei das Messsignal (27) ein Funksignal aufweist.

10. Garten- und/oder Forstsystem (10) nach einem der vorhergehenden Ansprüche,
- wobei eines der beiden Abstandsteile (25, 26) dazu ausgebildet ist, das Messsignal (27) zu senden und zu empfangen, und wobei ein anderes der beiden Abstandsteile (26, 25) dazu ausgebildet ist, das Messsignal zu reflektieren.

11. Garten- und/oder Forstsystem (10) nach einem der vorhergehenden Ansprüche,
- wobei eines der beiden Abstandsteile (25, 26) dazu ausgebildet ist, das Messsignal (27) zu senden, und wobei ein anderes der beiden Abstandsteile (26, 25) dazu ausgebildet ist, das Messsignal zu empfangen.

12. Garten- und/oder Forstsystem (10) nach einem der vorhergehenden Ansprüche,
- wobei das Abstandsmesssystem dazu ausgebildet ist, den Abstand (DI) zwischen dem ersten Abstandsteil und dem zweiten Abstandsteil basierend auf einer Laufzeit des Messsignals (27) zu messen.

13. Garten- und/oder Forstsystem (10) nach einem der vorhergehenden Ansprüche,
- wobei das Garten- und/oder Forstsystem (10) dazu ausgebildet ist, einen Referenzabstand (RD) zu definieren und bei der Information (Info) den definierten Referenzabstand zu berücksichtigen.

## Claims

1. Gardening and/or forestry system (10), comprising:
- a distance measuring system (20), including a first distance part (25) and a second distance part (26),
- wherein the second distance part is configured to be carried on a body (30) of a gardener and/or forestry worker (31),
- wherein the distance measuring system is configured to exchange a measuring signal (27) between the first distance part and the second distance part and to measure a distance (DI) between the first distance part and the second distance part based on the exchanged measuring signal, and
- an output device (35) configured to output information (Info) based on the measured distance to the gardener and/or forestry worker,
**characterized in that**
the second distance part (26) is configured to at least partially clasp a limb (32) of the body (30) of the gardener and/or forestry worker (31), and/or wherein the gardening and/or forestry system (10) comprises a protective helmet (45) and/or a face shield and/or ear protection (46) and/or safety goggles and/or a protective glove and/or a smartwatch (47) and/or an armband and/or a wristband and/or a bracelet, whereon the second distance part (26) is disposed.

2. Gardening and/or forestry system (10) according to claim 1,
- wherein the first distance part (25) is configured to be attached to a gardening and/or forestry apparatus (40).

3. Gardening and/or forestry system (10) according to claim 2, comprising:
- the gardening and/or forestry apparatus (40), wherein the first distance part (25) is attached to the gardening and/or forestry apparatus.

4. Gardening and/or forestry system (10) according to claim 2 or 3,
- wherein the gardening and/or forestry apparatus (40) includes an axe (41) and/or a pickaroon and/or a peavey and/or a wedge and/or a saw and/or a driving energy storage device (44).

5. Gardening and/or forestry system (10) according to any of claims 2 to 4,
- wherein the gardening and/or forestry apparatus (40) includes an extendable telescopic device (48), wherein the first distance part (25) is attached to the telescopic device.

6. Gardening and/or forestry system (10) according to any of the preceding claims, comprising:
- a protective helmet (45) and/or a face shield and/or ear protection (46) and/or safety goggles and/or a protective glove and/or a smartwatch (47) and/or an armband and/or a wristband and/or a bracelet, whereon the output device (35) is disposed.

7. Gardening and/or forestry system (10) according to any of the preceding claims,
- wherein the output device (35) includes a display (36) and/or a sound generator (37) and/or a vibration device (38).

8. Gardening and/or forestry system (10) according to any of the preceding claims,
- wherein the distance measuring system (20) is configured to measure the distance (DI) in a contactless manner.

9. Gardening and/or forestry system (10) according to any of the preceding claims,
- wherein the measuring signal (27) includes a radio signal.

10. Gardening and/or forestry system (10) according to any of the preceding claims,
- wherein one of the two distance parts (25, 26) is configured to send and to receive the measuring signal (27), and wherein another one of the two distance parts (26, 25) is configured to reflect the measuring signal.

11. Gardening and/or forestry system (10) according to any of the preceding claims,
- wherein one of the two distance parts (25, 26) is configured to send the measuring signal (27), and wherein another one of the two distance parts (26, 25) is configured to receive the measuring signal.

12. Gardening and/or forestry system (10) according to any of the preceding claims,
- wherein the distance measuring system is configured to measure the distance (DI) between the first distance part and the second distance part based on a propagation delay of the measuring signal (27).

13. Gardening and/or forestry system (10) according to any of the preceding claims,
- wherein the gardening and/or forestry system (10) is configured to define a reference distance (RD) and to take the defined reference distance into account in the information (Info).

## Revendications

1. Système pour jardin et/ou forêt (10), comprenant :
- un système de mesure d'espacement (20), possédant une première pièce d'espacement (25) et une deuxième pièce d'espacement (26),
- la deuxième pièce d'espacement étant configurée pour être portée sur un corps (30) d'un jardinier et/ou d'un ouvrier forestier (31),
- le système de mesure d'espacement étant configuré pour échanger un signal de mesure (27) entre la première pièce d'espacement et la deuxième pièce d'espacement et, en se basant sur le signal de mesure échangé, mesurer un espacement (DI) entre la première pièce d'espacement et la deuxième pièce d'espacement, et
- un dispositif de délivrance (35), qui est configuré pour délivrer au jardinier et/ou à l'ouvrier forestier des informations (Info) basées sur l'espacement mesuré, **caractérisé en ce que** la deuxième pièce d'espacement (26) est configurée pour entourer au moins partiellement une extrémité (32) du corps (30) du jardinier et/ou de l'ouvrier forestier (31) et/ou le système pour jardin et/ou forêt (10) comporte un casque de protection (45) et/ou une protection du visage et/ou auditive (46) et/ou des lunettes de protection et/ou un gant de protection et/ou une montre connectée (47) et/ou un brassard et/ou un bracelet sur lequel/laquelle est disposée la deuxième pièce d'espacement (26).

2. Système pour jardin et/ou forêt (10) selon la revendication 1,
- la première pièce d'espacement (25) étant configurée pour être montée sur un appareil de jardinage et/ou forestier (40).

3. Système pour jardin et/ou forêt (10) selon la revendication 2, comprenant :
- l'appareil de jardinage et/ou forestier (40), la première pièce d'espacement (25) étant montée sur l'appareil de jardinage et/ou forestier.

4. Système pour jardin et/ou forêt (10) selon la revendication 2 ou 3,
- l'appareil de jardinage et/ou forestier (40) comprenant une hache (41) et/ou une sapie et/ou un serretronc et/ou une cale et/ou une scie et/ou un accumulateur d'énergie d'entraînement (44).

5. Système pour jardin et/ou forêt (10) selon l'une des revendications 2 à 4,
- l'appareil de jardinage et/ou forestier (40) comprenant un arrangement télescopique (48) extractible, la première pièce d'espacement (25) étant montée sur l'arrangement télescopique.

6. Système pour jardin et/ou forêt (10) selon l'une des revendications précédentes, comprenant :
- un casque de protection (45) et/ou une protection du visage et/ou auditive (46) et/ou des lunettes de protection et/ou un gant de protection et/ou une montre connectée (47) et/ou un brassard et/ou un bracelet sur lequel/laquelle est disposé le dispositif de délivrance (35) .

7. Système pour jardin et/ou forêt (10) selon l'une des revendications précédentes,
- le dispositif de délivrance (35) comprenant un afficheur (36) et/ou un générateur sonore (37) et/ou un dispositif vibrant (38).

8. Système pour jardin et/ou forêt (10) selon l'une des revendications précédentes,
- le système de mesure d'espacement (20) étant configuré pour mesurer l'espacement (DI) sans contact.

9. Système pour jardin et/ou forêt (10) selon l'une des revendications précédentes,
- le signal de mesure (27) comprenant un signal radio.

10. Système pour jardin et/ou forêt (10) selon l'une des revendications précédentes,
- l'une des deux pièces d'espacement (25, 26) étant configurée pour émettre et pour recevoir le signal de mesure (27), et une autre des deux pièces d'espacement (26, 25) étant configurée pour réfléchir le signal de mesure.

11. Système pour jardin et/ou forêt (10) selon l'une des revendications précédentes,
- l'une des deux pièces d'espacement (25, 26) étant configurée pour émettre le signal de mesure (27), et une autre des deux pièces d'espacement (26, 25) étant configurée pour recevoir le signal de mesure.

12. Système pour jardin et/ou forêt (10) selon l'une des revendications précédentes,
- le système de mesure d'espacement étant configuré pour mesurer l'espacement (DI) entre la première pièce d'espacement et la deuxième pièce d'espacement en se basant sur un temps de propagation du signal de mesure (27) .

13. Système pour jardin et/ou forêt (10) selon l'une des revendications précédentes,
- le système pour jardin et/ou forêt (10) étant configuré pour définir un espacement de référence (RD) et tenir compte de l'espacement de référence défini lors des informations (Info).
